# EUROPÄISCHE PATENTSCHRIFT

(11) **EP 3 348 455 B1**
(45) Veröffentlichungstag und Bekanntmachung des Hinweises auf die Patenterteilung: **15.04.2020**
(21) Anmeldenummer: 17206475.0
(22) Anmeldetag: 11.12.2017
(51) Int. Cl.: B62D 21/20

(54) **TRÄGERSTRUKTUR FÜR EIN NICHT-ANGETRIEBENES NUTZFAHRZEUG**
SUPPORT STRUCTURE FOR A NON-DRIVEN COMMERCIAL VEHICLE
STRUCTURE DE SUPPORT POUR UN VÉHICULE UTILITAIRE NON ENTRAÎNÉ

(30) Priorität: 17.01.2017 DE 102017100847
(43) Veröffentlichungstag der Anmeldung: 18.07.2018
(73) Patentinhaber: apt Extrusions GmbH & Co. KG, 40789 Monheim am Rhein (DE)
(72) Erfinder: Abdulkadir, Demir, 40789 Monheim am Rhein (DE); Brieden, Thomas, 40223 Düsseldorf (DE); Michler, Stefan, 51399 Burscheid (DE)
(74) Vertreter: Hafner & Kohl Patent- und Rechtsanwälte Partnerschaft mbB

(56) Entgegenhaltungen:
- DE-A1- 3 906 628
- FR-A1- 2 868 503
- US-A- 4 232 884
- US-A- 5 417 453

## Beschreibung

Die Erfindung betrifft eine Trägerstruktur für ein nicht-angetriebenes Nutzfahrzeug, insbesondere einen mit einer Zugmaschine koppelbaren oder gekoppelten Anhänger, umfassend eine Anzahl an Hauptlängsträgerelementen, eine Anzahl an Querträgerelementen sowie eine Anzahl an sich zwischen der Anzahl an Hauptlängsträgerelementen, insbesondere sich parallel zu den Hauptlängsträgerelementen erstreckend, angeordneten Hilfslängsträgerelementen. Entsprechende Trägerstrukturen für nicht-angetriebene Nutzfahrzeuge, d. h. insbesondere Anhänger, sind dem Grunde nach bekannt. Entsprechende Trägerstrukturen umfassen typischerweise mehrere Hauptlängsträgerelemente, mehrere Querträgerelemente sowie mehrere sich zwischen den Hauptlängsträgerelementen erstreckende Hilfslängsträgerelemente. Die Hilfslängsträgerelemente erstrecken sich in Richtung der Längsachse der Trägerstruktur bis dato typischerweise zwischen unmittelbar aufeinander folgend bzw. benachbart angeordneten Querträgerelementen, an welchen diese befestigt sind.

Die Befestigung der Hauptlängsträgerelemente an den Querträgerelementen - typischerweise handelt es sich hier um eine Schraub- oder Schweißbefestigung - erfordert einen hohen Montageaufwand. Dies begründet sich insbesondere durch den Einsatz gesonderter Befestigungselemente, d. h. z. B. Befestigungswinkel, welche eine winklige Befestigung jeweiliger Hilfslängsträgerelemente an jeweiligen Querträgerelementen ermöglichen.

Mithin weisen entsprechende Trägerstrukturen aus konstruktiven Aspekten eine Vielzahl an Bauelementen auf, was insbesondere einen hohen Montageaufwand und ein hohes Eigengewicht nach sich zieht.

US 5 417 453 A lehrt eine Leichtbaustruktur für einen Anhänger.

DE 39 06 628 A1 beschreibt eine Bodenplattform für ein Chassis von Lastfahrzeugen. DE 39 06 628 A1 offenbart alle technische Merkmale des Oberbegriffs des Anspruchs 1.

Der Erfindung liegt die Aufgabe zugrunde, eine demgegenüber, insbesondere im Hinblick auf eine Reduzierung des Montageaufwands und des Eigengewichts, verbesserte Trägerstruktur für ein nicht-angetriebenes Nutzfahrzeug anzugeben

Die Aufgabe wird durch eine Trägerstruktur für ein nicht-angetriebenes Nutzfahrzeug gemäß Anspruch 1 gelöst. Die hierzu abhängigen Ansprüche betreffen mögliche Ausführungsformen der Trägerstruktur.

Die hierin beschriebene Trägerstruktur ist eine Trägerstruktur für ein nicht-angetriebenes Nutzfahrzeug, d. h. insbesondere einen mit einer Zugmaschine koppelbaren oder gekoppelten Anhänger, welchen einen Bestandteil eines Last- oder Sattelzugs, bilden kann. Die Trägerstruktur kann als Fahrgestellrahmen bzw. Chassis bezeichnet werden.

Die Trägerstruktur umfasst eine Anzahl, d. h. typischerweise eine Mehrzahl, an Hauptlängsträgerelementen, eine Anzahl, d. h. typischerweise eine Mehrzahl, an Querträgerelementen, sowie eine Anzahl, d. h. typischerweise eine Mehrzahl, an zwischen der Anzahl an Hauptlängsträgerelementen, insbesondere sich parallel zu den Hauptlängsträgerelementen erstreckend, angeordneten Hilfslängsträgerelementen. Die Hauptlängsträgerelemente sind typischerweise sich in Richtung der Längsachse der Trägerstruktur ("Längsrichtung") erstreckend angeordnet. Die Querträgerelemente sind typischerweise sich winklig, d. h. insbesondere rechtwinklig, zu der Längsachse der Trägerstruktur ("Querrichtung") erstreckend angeordnet. Die Hilfslängsträgerelemente sind, wie erwähnt, zwischen der Anzahl an Hauptlängsträgerelementen, insbesondere sich parallel zu den Hauptlängsträgerelementen erstreckend, d. h. typischerweise ebenso in Richtung der Längsachse der Trägerstruktur, angeordnet. Die Hauptlängsträgerelemente unterscheiden sich von den Hilfslängsträgerelementen typischerweise in der Abmessung und/oder in den mechanischen Eigenschaften; insbesondere sind die Hauptlängsträgerelemente wenigstens länger als die Hilfslängsträgerelemente ausgebildet und weisen, insbesondere aufgrund geometrisch-konstruktiver Maßnahmen, d. h. z. B. größerer Bemaßung der die Trageigenschaften der Hauptlängsträgerelemente definierenden geometrisch-konstruktiven Parameter, z. B. Querschnitt(sfläche), Höhe und Breite, eine höhere Tragfähigkeit als die Hilfslängsträgerelemente auf. Die genannten Bestandteile der Trägerstruktur sind unter Ausbildung der Trägerstruktur unmittelbar oder mittelbar aneinander befestigt bzw. miteinander verbunden.

Wesentlich ist, dass wenigstens ein, d. h. einzelne, mehrere oder sämtliche, Hilfslängsträgerelement(e) mit wenigstens einem, insbesondere mehreren, Aufnahmebereich(en) zur abschnittsweisen Aufnahme wenigstens eines Querträgerelements ausgebildet ist/sind oder wenigstens einen solchen Aufnahmebereich umfasst/umfassen. Ein entsprechendes Hilfslängsträgerelement ist durch einen entsprechenden Aufnahmebereich sonach neben der sich aus der geometrisch-konstruktiven Ausbildung ergebenden allgemeinen Funktionalität als Längsträger zusätzlich mit einer Aufnahme- bzw. Lagerfunktionalität zur (abschnittsweisen) Aufnahme bzw. Lagerung eines Querträgerelements ausgebildet.

Jedes Querträgerelement ist damit sich abschnittsweise, insbesondere quer zu der Längsachse der Trägerstruktur, durch einen Aufnahmebereich wenigstens eines Hilfslängsträgerelements erstreckend angeordnet. Jeweilige hilfslängsträgerelementseitige Aufnahmebereiche ermöglichen sonach eine abschnittsweise Aufnahme jeweiliger Querträgerelemente in jeweiligen Hilfslängsträgerelementen. Wie sich im Weiteren konkret ergibt, eröffnen entsprechende hilfslängsträgerelementseitige Aufnahmebereiche ein im Gegensatz zu dem eingangs beschriebenen Stand der Technik völlig anderes Befestigungs- bzw. Montagekonzept einer Trägerstruktur, welche, insbesondere aufgrund der Möglichkeit des Verzichts auf gesonderte Befestigungselemente, d. h. insbesondere Befestigungswinkel, zur Befestigung der Hilfslängsträgerelemente an den Querträgerelementen eine geringere Anzahl an Bauelementen aufweist. Wie sich ebenso im Weiteren zudem konkret ergibt, eröffnen entsprechende hilfslängsträgerelementseitige Aufnahmebereiche zudem eine günstigere Last- bzw. Krafteinleitung respektive eine günstigere Last- bzw. Kraftverteilung innerhalb der Trägerstruktur, insbesondere innerhalb der Querträgerelemente der Trägerstruktur, da unerwünschte Torsionsbelastungen durch Druckbelastungen ersetzt werden können. Dies ermöglicht zunächst eine Reduzierung der die Trageigenschaften der Querträgerelemente definierenden Querschnitte, sodass Material und Gewicht eingespart werden kann. Zudem kann (im Vergleich zu bekannten Trägerstrukturen) insbesondere auch eine Reduzierung der Anzahl an Hilfslängsträgerelementen möglich sein, was ebenso eine Reduzierung von Material und Gewicht sowie eine Reduzierung des Montageaufwands bedingt.

Die Trägerstruktur umfasst typischerweise mehrere mit jeweiligen Aufnahmebereichen ausgebildete oder solche umfassende Hilfslängsträgerelemente. Die jeweiligen hilfsträgerelementseitigen Aufnahmebereiche benachbart, insbesondere parallel, angeordneter Hilfslängsträgerelemente sind, insbesondere quer zur Längsrichtung der Trägerstruktur, miteinander fluchtend angeordnet. Hieraus ergibt sich, dass ein jeweiliges Querträgerelement selbstverständlich auch die Aufnahmebereiche mehrerer benachbart, insbesondere parallel, angeordneter Hilfslängsträgerelemente durchsetzen kann. Dies wirkt sich positiv auf die Last- bzw. Krafteinleitung respektive die Last- bzw. Kraftverteilung innerhalb der Trägerstruktur aus.

Ein jeweiliger hilfslängsträgerelementseitiger Aufnahmebereich ist durch eine einseitig offene, insbesondere U-artig oder U-förmig gestaltete, Ausnehmung bzw. Aussparung in dem Hilfslängsträgerelement ausgebildet. Ein Hilfslängsträgerelement ist sonach mit einer Ausnehmung bzw. Aussparung ausgebildet, welche einen Aufnahmebereich zur abschnittsweisen Aufnahme eines das Hilfslängsträgerelement abschnittsweise durchsetzenden Querträgerelements bildet. Konkret ist ein entsprechender Aufnahmebereich sonach durch die eine entsprechende Aussparung bzw. Ausnehmung begrenzenden Wandungen bzw. Wandungsabschnitte des Hilfslängsträgerelements definiert. Die Abmessungen der Aussparungen bzw. Ausnehmungen sind auf die Abmessungen, d. h. insbesondere die Querschnittsgeometrie, eines jeweiligen Querträgerelements angepasst, sodass das Querträgerelement eine jeweilige Aussparung bzw. Ausnehmung in Querrichtung, gegebenenfalls mit einem gewissen, einem Toleranzausgleich dienenden Spiel, durchsetzt.

Jeweilige Ausnehmungen bzw. Aussparungen sind im Montagezustand der Trägerstruktur in Richtung eines Bodens bzw. Untergrunds, insbesondere einer Fahrbahn, entlang welcher die Trägerstruktur bzw. ein mit der Trägerstruktur ausgestattetes nicht-angetriebenes Nutzfahrzeug bewegbar ist, ausgerichtet angeordnet. Eine jeweilige Ausnehmung bzw. Aussparung ist sonach im Montagezustand der Trägerstruktur zweckmäßig nach unten geöffnet; die Hilfslängsträgerelemente liegen damit im Montagezustand der Trägerstruktur auf den Querträgerelementen auf. Dies hat zur Folge, dass bei bestimmungsgemäßer Benutzung der Trägerstruktur vertikal wirkende Belastungen bzw. Kräfte nicht direkt in die Querträgerelemente, sondern indirekt über die, wie erwähnt, auf den Querträgerelementen aufliegenden Hilfslängsträgerelemente in die Querträgerelemente eingeleitet werden, welche sonach (im Wesentlichen) auf Druck, nicht auf Torsion beansprucht werden. Wie weiter oben erwähnt, ist damit eine günstigere Last- bzw. Krafteinleitung respektive eine günstigere Last- bzw. Kraftverteilung innerhalb der Trägerstruktur, insbesondere innerhalb der Querträgerelemente der Trägerstruktur, gegeben.

Eine jeweilige Ausnehmung bzw. Aussparung kann im Montagezustand der Trägerstruktur zweckmäßig durch ein (diese) abdeckendes, wenigstens an dem Hilfslängsträgerelement befestigtes, insbesondere plattenartiges bzw. -förmiges, Montageelement verschlossen sein. Ein jeweiliges die Ausnehmung durchsetzendes Querträgerelement sitzt sonach zweckmäßig unterseitig auf einem entsprechenden Montageelement auf, sodass es Belastungen, d. h. insbesondere Biegemomente, aufnehmen kann. Ein jeweiliges Montageelement, bei welchem es sich insbesondere um eine Montageplatte handelt, kann über beliebige Befestigungsarten, d. h. insbesondere form- und/oder kraft- und/oder stoffschlüssige Befestigungsarten, an einem Hilfslängsträgerelement befestigt sein, sodass lediglich beispielhaft auf formschlüssige Klemm- oder Nietbefestigungen, (form- und) kraftschlüssige Schraubbefestigungen oder stoffschlüssige Schweißbefestigungen verwiesen wird. Selbstverständlich sind kombinierte Befestigungsarten denkbar.

Ein jeweiliges Montageelement kann (zusätzlich) auch an einem eine jeweilige hilfslängsträgerelementseitige Ausnehmung durchsetzenden Querträgerelement befestigt sein. Die Befestigung jeweiliger Montageelemente an jeweiligen Querträgerelementen kann insbesondere für geklebte Fahrzeugböden zweckmäßig sein, um Schubbelastungen an den Klebestellen im Bereich der Auflage der Hilfslängsträgerelemente auf den Querträgerelementen zu vermeiden. Analog zu der Befestigung eines Montageelements an einem Hilfslängsträgerelement kann das Montageelement über beliebige Befestigungsarten, d. h. insbesondere form- und/oder kraft- und/oder stoffschlüssige Befestigungsarten, an einem Querträgerelement befestigt sein, sodass lediglich beispielhaft auf formschlüssige Klemm- oder Nietbefestigungen, (form- und) kraftschlüssige Schraubbefestigungen oder stoffschlüssige Schweißbefestigungen, insbesondere Inloch-Schweißbefestigungen, verwiesen wird. Selbstverständlich sind auch hier kombinierte Befestigungsarten denkbar.
Ein jeweiliges Querträgerelement kann, etwa im Hinblick auf den Ausgleich von fertigungsbedingten Toleranzen, mit einem gewissen Spiel innerhalb eines jeweiligen hilfslängsträgerelementseitigen Aufnahmebereichs aufgenommen sein.

Zwischen einem jeweiligen Querträgerelement und einem Hilfslängsträgerelement kann ein Dämpfungselement angeordnet sein. Das z. B. aus einem elastomeren, insbesondere gummiartigen, Material gebildete oder ein solches umfassende Dämpfungselement ist insbesondere eingerichtet, eine Schwingungsentkopplung zwischen einem Hilfslängsträgerelement und einem Querträgerelement zu realisieren. Entsprechende Dämpfungselemente können auch dazu dienen, auf Befestigungselemente, d. h. insbesondere Befestigungsschrauben, wirkende Scherbelastungen zu kompensieren. Konkret kann das Dämpfungselement in einem hilfslängsträgerelementseitigen Aufnahmebereich zwischen den den hilfslängsträgerelementseitigen Aufnahmebereich begrenzenden Wandungen bzw. Wandungsabschnitten des Hilfslängsträgerelements und dem in dem hilfslängsträgerelementseitigen Aufnahmebereich aufgenommenen Abschnitt des Querträgerelements angeordnet bzw. befestigt sein.

Die Trägerstruktur umfasst typischerweise eine (äußere) Rahmenstruktur, einer insbesondere rechteckigen Grundform, welche zwei sich in Längsrichtung der Trägerstruktur erstreckend angeordnete Rahmenlängselemente und wenigstens zwei sich quer zur Längsachse der Trägerstruktur erstreckend angeordnete Rahmenquerelemente umfasst. Die beiden Rahmenlängselemente sind, insbesondere im Bereich ihrer jeweiligen freien Enden, durch die beiden Rahmenquerelemente aneinander befestigt bzw. miteinander verbunden. Die Hauptlängsträgerelemente, Querträgerelemente und Hilfslängsträgerelemente sind typischerweise innerhalb der Rahmenstruktur angeordnet. Die Rahmenstruktur definiert typischerweise die äußeren Abmessungen der Trägerstruktur.

Jeweilige Hilfslängsträgerelemente können sich in Richtung der Längsachse der Trägerstruktur wenigstens zwischen einem, insbesondere dem ersten, im Bereich eines vorderen, d. h. auflager- bzw. sattelbereichsseitigen, Endes der Trägerstruktur angeordneten Querträgerelement und einem, insbesondere dem letzten, im Bereich eines hinteren Endes der Trägerstruktur angeordneten Querträgerelement oder einem das hintere Ende der Trägerstruktur bildenden Rahmenquerelement erstrecken. Typischerweise erstrecken sich die Hilfslängsträgerelemente bis zu einem Auflager- bzw. Sattelbereich der Trägerstruktur. Die Hilfslängsträgerelemente können sich gleich weit in Richtung der Längsachse der Trägerstruktur erstrecken; selbstverständlich ist es auch möglich, dass sich unterschiedliche Hilfslängsträgerelemente unterschiedlich weit in Richtung der Längsachse der Trägerstruktur erstrecken.

Um das Gewicht der Trägerstruktur (weiter) zu reduzieren, können wenigstens die Hilfslängsträgerelemente aus einem auf Aluminium basierenden metallischen Werkstoff, insbesondere einer Aluminiumlegierung, gebildet sein. Bei einer entsprechenden Aluminiumlegierung kann es sich z. B. um eine Aluminium-Magnesium-Silizium-Legierung (6000er-Legierung) handeln, welche sich neben einem geringen spezifischen Gewicht durch gute mechanische Eigenschaften sowie ein gutes Umformverhalten auszeichnet. Selbstverständlich können auch die Hauptlängsträgerelemente und die Querträgerelemente aus einem auf Aluminium basierenden metallischen Werkstoff, insbesondere einer Aluminiumlegierung, gebildet sein.

Bei den Hilfslängsträgerelementen handelt es sich um profilartige bzw. profilförmige Bauelemente, d. h. insbesondere um I-Profile (Doppel-T-Profile) bzw. um I-Träger (Doppel-T-Träger). Sind die Hilfslängsträgerelemente aus einer gut umformbaren (duktilen) Aluminiumlegierung gebildet, kann es sich bei den Hilfslängsträgerelementen um Strangpressprofile handeln, was fertigungstechnische Vorteile mit sich bringt. Analoges gilt für die Hauptlängsträgerelemente und die Querträgerelemente.

Neben der Trägerstruktur betrifft die Erfindung auch ein nicht-angetriebenes Nutzfahrzeug, d. h. insbesondere einen mit einer Zugmaschine koppelbaren oder gekoppelten Anhänger. Das nicht-angetriebene Nutzfahrzeug umfasst ein Fahrgestell, welches ein Fahrwerk mit den Achsen, Rädern etc. sowie der Trägerstruktur, die, wie erwähnt, auch als Fahrgestellrahmen oder Chassis bezeichnet wird. Das nicht-angetriebene Nutzfahrzeug zeichnet sich dadurch aus, dass es eine wie beschriebene Trägerstruktur umfasst. Die Trägerstruktur bildet typischerweise eine Auflage- bzw. Nutzfläche des nicht-angetriebenen Nutzfahrzeugs bzw. eine Grundfläche einer solchen. Sämtliche Ausführungen im Zusammenhang mit der Trägerstruktur gelten analog für das nicht-angetriebene Nutzfahrzeug.

Die Erfindung ist anhand von Ausführungsbeispielen in den Zeichnungsfiguren näher erläutert. Dabei zeigen:
- Fig. 1: eine Prinzipdarstellung einer Trägerstruktur gemäß einem Ausführungsbeispiel;
- Fig. 2: eine vergrößerte Ansicht der in Fig. 1 gezeigten Trägerstruktur;
- Fig. 3: eine Prinzipdarstellung eines Vormontagezustands einer Trägerstruktur; und
- Fig. 4: eine vergrößerte Ansicht der in Fig. 3 gezeigten Trägerstruktur.

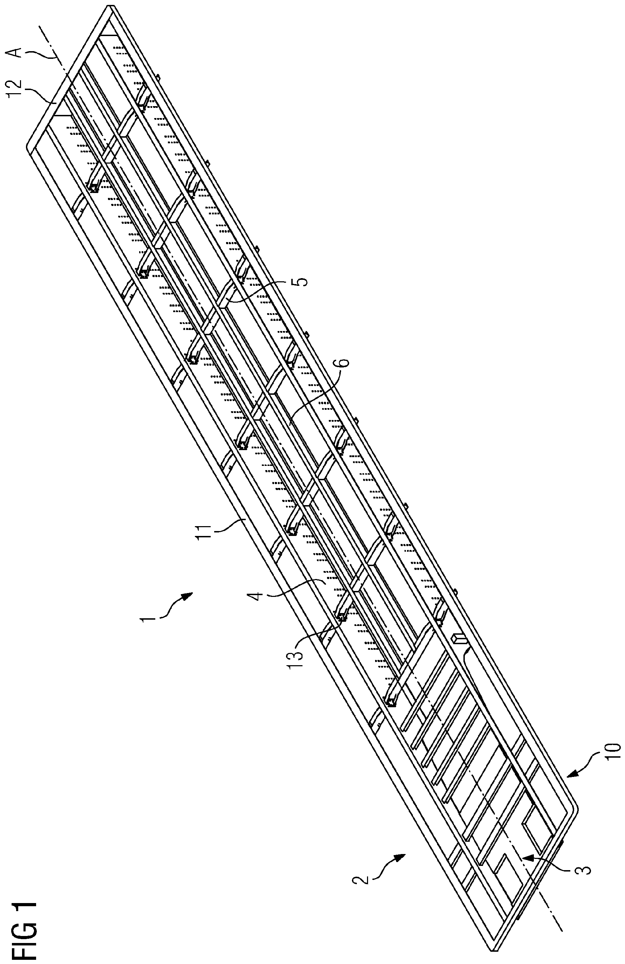

Fig. 1 zeigt eine Prinzipdarstellung einer Trägerstruktur 1 gemäß einem Ausführungsbeispiel. Die Trägerstruktur 1 ist in Fig. 1 in einer perspektivischen Ansicht auf ihre Oberseite dargestellt.

Die in den Fig. gezeigte Trägerstruktur 1 ist eine Trägerstruktur 1 für ein nicht-angetriebenes Nutzfahrzeug (nicht bezeichnet), d. h. insbesondere einen mit einer Zugmaschine koppelbaren oder gekoppelten Anhänger, welcher einen Bestandteil eines Last- oder Sattelzugs, bilden kann. Die Trägerstruktur 1 kann auch als Fahrgestellrahmen bzw. Chassis zu bezeichnet werden. Die Trägerstruktur 1 bildet typischerweise eine Auflage- bzw. Nutzfläche des nicht-angetriebenen Nutzfahrzeugs bzw. eine Grundfläche einer solchen.

Das nicht-angetriebene Nutzfahrzeug umfasst ein Fahrgestell (nicht bezeichnet), bestehend aus einem Fahrwerk (nicht gezeigt) mit den Achsen, Rädern etc. sowie der Trägerstruktur 1. Das Fahrgestell verbindet das nicht-angetriebene Nutzfahrzeug mit einer Zugmaschine, wozu in einem (vorderen) Auflager- bzw. Sattelbereich 2 der Trägerstruktur 1 eine Verbindungseinrichtung 3, welche z. B. ein zapfenartiges bzw. - förmiges Verbindungselement ("Königszapfen") (nicht gezeigt) umfasst, ausgebildet ist.

Die Trägerstruktur 1 umfasst mehrere, d. h. vorliegend beispielhaft zwei, Hauptlängsträgerelemente 4, mehrere, d. h. vorliegend beispielhaft sieben, Querträgerelemente 5, sowie mehrere, d. h. vorliegend beispielhaft zwei, zwischen den Hauptlängsträgerelementen 4, sich parallel zu den Hauptlängsträgerelementen 4 erstreckend angeordnete Hilfslängsträgerelemente 6. Ersichtlich sind die Hauptlängsträgerelemente 4 sich in Richtung der Längsachse A der Trägerstruktur 1 ("Längsrichtung") erstreckend angeordnet, die an den Hauptlängsträgerelementen 4 über geeignete Befestigungselemente 13, d. h. insbesondere Befestigungswinkel, befestigten Querträgerelemente 5 sich rechtwinklig zu der Längsachse A der Trägerstruktur 1 ("Querrichtung") erstreckend angeordnet und die, wie erwähnt, zwischen den Hauptlängsträgerelementen 4, sich parallel zu den Hauptlängsträgerelementen 4 erstreckend angeordneten Hilfslängsträgerelemente 6 sich ebenso in Richtung der Längsachse A der Trägerstruktur 1 erstreckend angeordnet.

Die Hauptlängsträgerelemente 4, die Querträgerelemente 5 und die Hilfslängsträgerelemente 6 sind als profilartige bzw. profilförmige Bauelemente, d. h. insbesondere als I-Profile (Doppel-T-Profile) bzw. um I-Träger (Doppel-T-Träger), ausgebildet, bei welchen es sich gegebenenfalls um Strangpressprofile handeln kann. Die Hauptlängsträgerelemente 4 unterscheiden sich von den Hilfslängsträgerelementen 6 in der Abmessung und/oder in den mechanischen Eigenschaften; die Hauptlängsträgerelemente 4 sind wenigstens länger als die Hilfslängsträgerelemente 6 ausgebildet und weisen, insbesondere aufgrund geometrisch-konstruktiver Maßnahmen, d. h. z. B. größerer Bemaßung der die Trageigenschaften der Hauptlängsträgerelemente 4 definierenden geometrisch-konstruktiven Parameter, z. B. Querschnitt(sfläche), Höhe und Breite, eine höhere Tragfähigkeit als die Hilfslängsträgerelemente 6 auf.

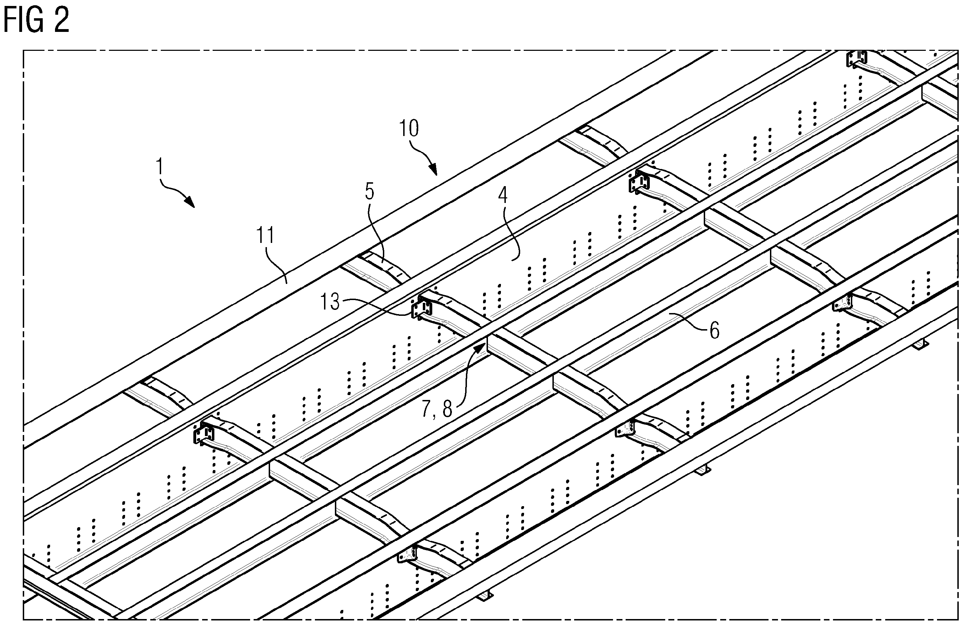

Anhand der Fig. 1, 2 ist ersichtlich, dass die Trägerstruktur 1 eine (äußere) Rahmenstruktur 10 rechteckiger Grundform umfasst. Die Rahmenstruktur 10 umfasst zwei sich in Richtung der Längsachse A der Trägerstruktur 1 erstreckend angeordnete Rahmenlängselemente 11 und zwei sich quer zur Längsachse A der Trägerstruktur 1 erstreckend angeordnete Rahmenquerelemente 12. Die Rahmenlängselemente 11 sind im Bereich ihrer jeweiligen freien Enden durch die Rahmenquerelemente 12 aneinander befestigt bzw. miteinander verbunden. Die Hauptlängsträgerelemente 4, Querträgerelemente 5 und Hilfslängsträgerelemente 6 sind innerhalb der Rahmenstruktur 10 angeordnet.

Während sich die Hauptlängsträgerelemente 4 in den in den Fig. gezeigten Ausführungsbeispielen in Richtung der Längsachse A der Trägerstruktur 1 zwischen den Rahmenquerelementen 12 erstrecken, erstrecken sich die Hilfslängsträgerelemente 4 in Richtung der Längsachse A der Trägerstruktur 1 nur zwischen einem, d. h. dem ersten, im Bereich eines vorderen, d. h. auflager- bzw. sattelbereichsseitigen, Endes der Trägerstruktur 1 angeordneten Querträgerelement 5 und dem das hintere Ende der Trägerstruktur 1 bildenden Rahmenquerelement 12. Mit anderen Worten erstrecken sich die Hilfslängsträgerelemente 6 von dem hinteren Ende der Trägerstruktur 1 bis zu dem Auflager- bzw. Sattelbereich 2 der Trägerstruktur 1.

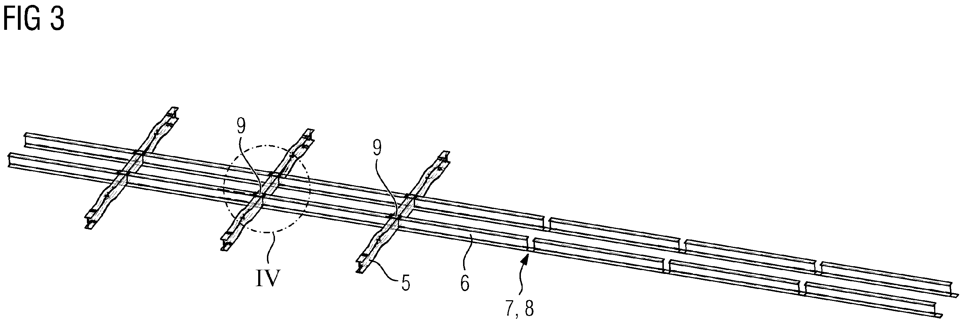

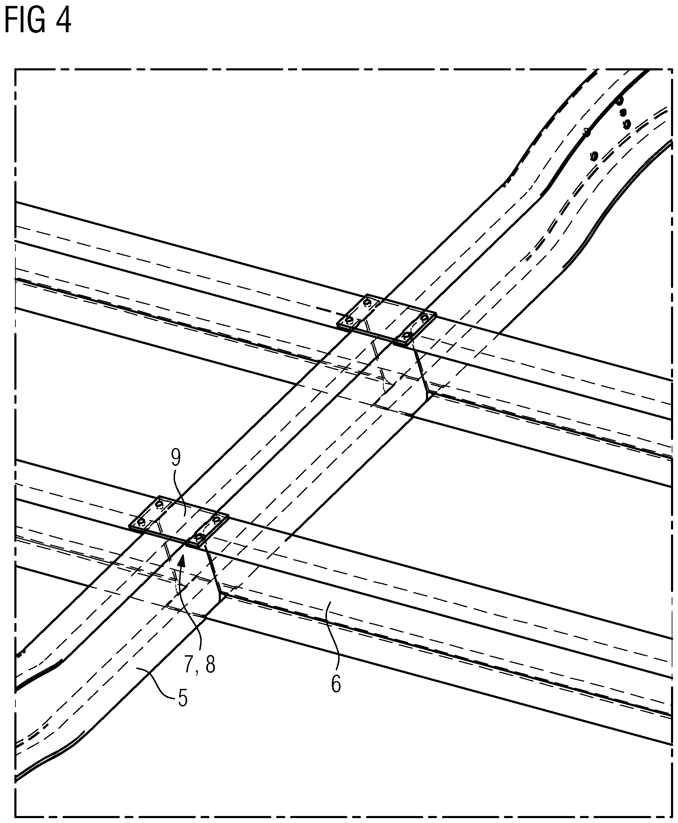

Anhand der Fig. 3, 4, wobei Fig. 3 eine Prinzipdarstellung eines Vormontagezustands der Trägerstruktur 1 in einer perspektivischen Ansicht auf ihre Unterseite und Fig. 4 eine vergrößerte Ansicht der in Fig. 3 gezeigten Trägerstruktur 1 zeigt, ist ersichtlich, dass die Hilfslängsträgerelemente 6 mit Aufnahmebereichen 7 zur abschnittsweisen Aufnahme wenigstens eines Querträgerelements 5 ausgebildet sind. Die Hilfslängsträgerelemente 6 sind durch entsprechende Aufnahmebereiche 7 sonach neben der sich aus der geometrisch-konstruktiven Ausbildung ergebenden allgemeinen Funktionalität als Längsträger zusätzlich mit einer Aufnahme- bzw. Lagerfunktionalität zur (abschnittsweisen) Aufnahme bzw. Lagerung eines Querträgerelements 5 ausgebildet. Jedes Querträgerelement 5 ist damit sich abschnittsweise quer zu der Längsachse A der Trägerstruktur 1 durch einen Aufnahmebereich 7 eines Hilfslängsträgerelements 6 erstreckend angeordnet (vgl. insbesondere Fig. 3, 4). Jeweilige hilfslängsträgerelementseitige Aufnahmebereiche 7 ermöglichen sonach eine abschnittsweise Aufnahme jeweiliger Querträgerelemente 5 in jeweiligen Hilfslängsträgerelementen 6. Die hilfsträgerelementseitigen Aufnahmebereiche 7 benachbart, d. h. insbesondere parallel, angeordneter Hilfslängsträgerelemente 6 sind quer zur Längsrichtung der Trägerstruktur 1 miteinander fluchtend angeordnet. Hieraus ergibt sich, dass jeweilige Querträgerelemente 5 auch die Aufnahmebereiche 7 mehrerer benachbart, d. h. insbesondere parallel, angeordneter Hilfslängsträgerelemente 6 durchsetzen.

Die hilfslängsträgerelementseitigen Aufnahmebereiche 7 eröffnen ein besonderes Befestigungs- bzw. Montagekonzept der Trägerstruktur 1, welche, insbesondere aufgrund der Möglichkeit des Verzichts auf gesonderte Befestigungselemente, d. h. insbesondere Befestigungswinkel, zur Befestigung der Hilfslängsträgerelemente 6 an den Querträgerelementen 5, eine geringere Anzahl an Bauelementen aufweist. Die hilfslängsträgerelementseitigen Aufnahmebereiche 7 eröffnen zudem eine günstigere Last- bzw. Krafteinleitung respektive eine günstigere Last- bzw. Kraftverteilung innerhalb der Trägerstruktur 1, insbesondere innerhalb der Querträgerelemente 5, da unerwünschte Torsionsbelastungen durch Druckbelastungen ersetzt werden können. Dies ermöglicht zunächst eine Reduzierung der die Trageigenschaften der Querträgerelemente 5 definierenden Querschnitte, sodass Material und Gewicht eingespart werden kann. Zudem kann (im Vergleich zu bekannten Trägerstrukturen) auch eine Reduzierung der Anzahl an Hilfslängsträgerelementen 6 möglich sein, was ebenso eine Reduzierung von Material und Gewicht bedingt.

Anhand der Fig. 3, 4 ist ersichtlich, dass jeweilige hilfslängsträgerelementseitige Aufnahmebereiche 7 in den in den Fig. gezeigten Ausführungsbeispielen durch einseitig offene, insbesondere U-artig oder U-förmig gestaltete, Ausnehmungen 8 bzw. Aussparungen in den Hilfslängsträgerelementen 6 ausgebildet sind. Die Hilfslängsträgerelemente 6 sind sonach mit Ausnehmungen 8 ausgebildet, welche einen Aufnahmebereich 7 zur abschnittsweisen Aufnahme eines das Hilfslängsträgerelement 6 abschnittsweise durchsetzenden Querträgerelements 5 bilden. Ein entsprechender Aufnahmebereich 7 ist konkret durch die eine entsprechende Aussparung 8 begrenzenden Wandungen bzw. Wandungsabschnitte des Hilfslängsträgerelements 6 definiert. Die Abmessungen der Aussparungen 8 sind auf die Abmessungen, d. h. insbesondere die Querschnittsgeometrie, eines jeweiligen Querträgerelements 5 angepasst, sodass das Querträgerelement 5 eine jeweilige Aussparung 8 in Querrichtung durchsetzt.

Anhand der Fig. 1, 2 ist ersichtlich, dass jeweilige Ausnehmungen 8 im Montagezustand der Trägerstruktur 1 in Richtung eines Bodens bzw. Untergrunds, insbesondere einer Fahrbahn, entlang welcher die Trägerstruktur 1 bzw. ein mit der Trägerstruktur 1 ausgestattetes nicht-angetriebenes Nutzfahrzeug bewegbar ist, ausgerichtet angeordnet sind. Die Ausnehmungen 8 sind sonach im Montagezustand der Trägerstruktur 1 nach unten geöffnet; die Hilfslängsträgerelemente 6 liegen damit im Montagezustand der Trägerstruktur 1 auf den Querträgerelementen 5 auf. Dies hat zur Folge, dass vertikal wirkende Belastungen bzw. Kräfte nicht direkt in die Querträgerelemente 5, sondern indirekt über die, wie erwähnt, auf den Querträgerelementen 5 aufliegenden Hilfslängsträgerelemente 6 in die Querträgerelemente 5 eingeleitet werden, welche sonach (im Wesentlichen) auf Druck, nicht auf Torsion beansprucht werden.

Anhand der Fig. 3, 4 ist ersichtlich, dass jeweilige Ausnehmungen 8 im Montagezustand der Trägerstruktur 1 durch ein (diese) abdeckendes, an dem Hilfslängsträgerelement 6 befestigtes plattenartiges bzw. -förmiges Montageelement 9 verschlossen sind bzw. werden. Die Querträgerelemente 5 sitzen sonach unterseitig auf einem entsprechenden Montageelement 9 auf, sodass diese Belastungen, d. h. insbesondere Biegemomente, aufnehmen können. Die Montageelemente 9, bei welchen es sich in den in den Fig. gezeigten Ausführungsbeispielen um Montageplatten handelt, können über beliebige Befestigungsarten, d. h. insbesondere form- und/oder kraft- und/oder stoffschlüssige Befestigungsarten, an den Hilfslängsträgerelementen 6 befestigt sein, sodass die in den in den Fig. gezeigten Ausführungsbeispielen dargestellte Schraubbefestigungen lediglich beispielhaft zu verstehen sind.

Selbstverständlich können die Montageelemente 9 (zusätzlich) auch an den eine jeweilige hilfslängsträgerelementseitige Ausnehmung 8 durchsetzenden Querträgerelementen 5 befestigt sein. Auch in diesem Zusammenhang kommen grundsätzlich beliebige Befestigungsarten, d. h. insbesondere form- und/oder kraft- und/oder stoffschlüssige Befestigungsarten, in Betracht.

Für alle Ausführungsbeispiele gilt, dass wenigstens die Hilfslängsträgerelemente 6 aus einem auf Aluminium basierenden metallischen Werkstoff, insbesondere einer Aluminiumlegierung, gebildet sein können. Bei einer entsprechenden Aluminiumlegierung kann es sich um eine Aluminium-Magnesium-Silizium-Legierung (6000er-Legierung) handeln, welche sich neben einem geringen spezifischen Gewicht durch gute mechanische Eigenschaften sowie ein gutes Umformverhalten auszeichnet. Selbstverständlich können auch die Hauptlängsträgerelemente 4 und die Querträgerelemente 5 sowie gegebenenfalls auch die Rahmenlängselemente 11 und die Rahmenquerelemente 12 aus einem auf Aluminium basierenden metallischen Werkstoff, insbesondere einer Aluminiumlegierung, gebildet sein.

Zu den in den Fig. gezeigten Ausführungsbeispielen ist anzumerken, dass zwischen einem jeweiligen Hilfslängsträgerelement 6 und einem Querträgerelement 5 ein Dämpfungselement (nicht gezeigt) angeordnet sein kann. Das z. B. aus einem elastomeren, insbesondere gummiartigen, Material gebildete Dämpfungselement ist insbesondere eingerichtet, eine Schwingungsentkopplung zwischen dem Hilfslängsträgerelement 6 und dem Querträgerelement 5 zu realisieren. Konkret kann ein entsprechendes Dämpfungselement in einem hilfslängsträgerelementseitigen Aufnahmebereich 7 zwischen den den Aufnahmebereich 7 begrenzenden Wandungen bzw. Wandungsabschnitten des Hilfslängsträgers 6 und dem in dem Aufnahmebereich 7 aufgenommenen Abschnitt des Querträgerelements 5 angeordnet bzw. befestigt sein.

## Patentansprüche

1. Trägerstruktur (1) für ein nicht-angetriebenes Nutzfahrzeug, insbesondere einen mit einer Zugmaschine koppelbaren oder gekoppelten Anhänger, umfassend:
- eine Anzahl an Hauptlängsträgerelementen (4),
- eine Anzahl an Querträgerelementen (5),
- eine Anzahl an zwischen der Anzahl an Hauptlängsträgerelementen (4), insbesondere sich parallel zu den Hauptlängsträgerelementen (4) erstreckend, angeordneten Hilfslängsträgerelementen (6), wobei
- wenigstens ein Hilfslängsträgerelement (6) mit wenigstens einem Aufnahmebereich (7) zur abschnittsweisen Aufnahme wenigstens eines Querträgerelements (5) ausgebildet ist oder wenigstens einen solchen Aufnahmebereich (7) umfasst,
- wenigstens ein Aufnahmebereich (7) wenigstens eines Hilfslängsträgerelements (6) einseitig offen ausgebildet ist,
- der Aufnahmebereich (7) durch eine einseitig offene, U-förmig gestaltete, Ausnehmung (8) in dem Hilfslängsträgerelement (6) ausgebildet ist,
- die Ausnehmung (8) im Montagezustand der Trägerstruktur (1) in Richtung eines Untergrunds ausgerichtet angeordnet ist,
- wenigstens die Hilfslängsträgerelemente (6) als profilförmige Bauelemente ausgebildet sind,
**dadurch gekennzeichnet, dass** die Abmessungen der Ausnehmung (8) auf die Abmessungen des Querträgerelementes (5) angepasst sind, sodass das Querträgerelement (5) die Ausnehmung (8) in Querrichtung durchsetzt.

2. Trägerstruktur nach Anspruch 1, **dadurch gekennzeichnet, dass** die Querträgerelemente (5) sich abschnittsweise durch einen Aufnahmebereich (7) wenigstens eines Hilfslängsträgerelements (6) erstreckend angeordnet sind.

3. Trägerstruktur nach Anspruch 1 oder 2, **gekennzeichnet durch** ein die Ausnehmung (8) im Montagezustand der Trägerstruktur (1) abdeckendes, wenigstens an dem Hilfslängsträgerelement (6) befestigtes Montageelement (9).

4. Trägerstruktur nach Anspruch 3, **dadurch gekennzeichnet, dass** das Montageelement (9) zusätzlich an einem Querträgerelement (5) befestigt ist.

5. Trägerstruktur nach einem der vorhergehenden Ansprüche, **gekennzeichnet durch** mehrere mit jeweiligen Aufnahmebereichen (7) ausgebildete oder solche umfassende Hilfslängsträgerelemente (6), wobei die jeweiligen hilfsträgerelementseitigen Aufnahmebereiche (7) benachbart angeordneter Hilfslängsträgerelemente (6) miteinander fluchtend angeordnet sind.

6. Trägerstruktur nach einem der vorhergehenden Ansprüche, **gekennzeichnet durch** eine Rahmenstruktur (10), welche zwei sich in Richtung der Längsachse (A) der Trägerstruktur (1) erstreckend angeordnete Rahmenlängselemente (11) und wenigstens zwei sich quer zur Richtung der Längsachse (A) der Trägerstruktur (1) erstreckend angeordnete Rahmenquerelemente (12) umfasst, wobei die beiden Rahmenlängselemente (11) durch die beiden Rahmenquerelemente (12) miteinander verbunden sind.

7. Trägerstruktur nach einem der vorhergehenden Ansprüche, **dadurch gekennzeichnet, dass** sich die Hilfslängsträgerelemente (6) in Richtung der Längsachse (A) der Trägerstruktur (1) wenigstens zwischen dem ersten im Bereich eines vorderen Endes der Trägerstruktur (1) angeordneten Querträgerelement (5) und dem letzten im Bereich eines hinteren Endes der Trägerstruktur (1) angeordneten Querträgerelement (5) oder einem das hintere Ende der Trägerstruktur (1) bildenden Rahmenquerelement (12) erstrecken.

8. Trägerstruktur nach einem der vorhergehenden Ansprüche, **dadurch gekennzeichnet, dass** wenigstens die Hilfslängsträgerelemente (6) aus einem auf Aluminium basierenden metallischen Werkstoff gebildet sind.

9. Trägerstruktur nach einem der vorhergehenden Ansprüche, **dadurch gekennzeichnet, dass** die Hauptlängsträgerelemente (4) sich entlang einer Längsachse (A) der Trägerstruktur (1) erstreckend angeordnet sind und die Querträgerelemente (5) sich winklig zu der Längsachse (A) der Trägerstruktur (1) erstreckend angeordnet sind.

10. Nicht-angetriebenes Nutzfahrzeug, insbesondere mit einer Zugmaschine koppelbarer oder gekoppelter Anhänger, **dadurch gekennzeichnet, dass** es eine Trägerstruktur (1) nach einem der vorhergehenden Ansprüche umfasst.

## Claims

1. Support structure (1) for a non-driven commercial vehicle, in particular a trailer that can be or is coupled to a tractor unit, comprising:
- a number of main side member elements (4),
- a number of crossmember elements (5),
- a number of auxiliary side member elements (6) that are arranged on the main side member elements (4), in particular so as to extend in parallel with the main side member elements (4), wherein
- at least one auxiliary side member element (6) is formed having at least one receiving region (7) for receiving at least one crossmember element (5) in portions, or comprises at least one receiving region (7) of this kind,
- at least one receiving region (7) of at least one auxiliary side member element (6) is designed so as to be open on one side,
- the receiving region (7) is formed by a U-shaped recess (8), open on one side, in the auxiliary side member element (6),
- the recess (8) is oriented towards a substrate when the support structure (1) is in the assembled state,
- at least the auxiliary side member elements (6) are formed as profile-like structural elements,
**characterised in that** the dimensions of the recess (8) are adjusted to the dimensions of the crossmember element (5), such that the crossmember element (5) passes through the recess (8) in the transverse direction.

2. Support structure according to claim 1, **characterised in that** the crossmember elements (5) are arranged so as to extend through a receiving region (7) of at least one auxiliary side member element (6), at least in portions.

3. Support structure according to claim 1 or 2, **characterised by** an assembly element (9) that is fastened at least to the auxiliary side member element (6) and covers the recess (8) when the support structure (1) is in the assembled state.

4. Support structure according to claim 3, **characterised in that** the assembly element (9) is additionally fastened to a crossmember element (5).

5. Support structure according to any of the preceding claims, **characterised by** a plurality of auxiliary side member elements (6) that are formed having respective receiving regions (7) or comprise such regions, wherein the respective receiving regions (7), on the auxiliary support element side, of adjacent auxiliary side member elements (6) are arranged so as to be flush with one another.

6. Support structure according to any of the preceding claims, **characterised by** a frame structure (10) which comprises two frame longitudinal elements (11) that are arranged so as to extend in the direction of the longitudinal axis (A) of the support structure (1), and at least two frame transverse elements (12) that are arranged so as to extend transversely to the direction of the longitudinal axis (A) of the support structure (1), wherein the two frame longitudinal elements (11) are interconnected by the two frame transverse elements (12).

7. Support structure according to any of the preceding claims, **characterised in that** the auxiliary side member elements (6) extend in the direction of the longitudinal axis (A) of the support structure (1), at least between the first crossmember element (5) that is arranged in the region of a front end of the support structure (1) and the last crossmember element (5) that is arranged in the region of a rear end of the support structure (1), or a frame transverse element (12) that forms the rear end of the support structure (1).

8. Support structure according to any of the preceding claims, **characterised in that** at least the auxiliary side member elements (6) are formed of an aluminium-based metal material.

9. Support structure according to any of the preceding claims, **characterised in that** the main side member elements (4) are arranged so as to extend along a longitudinal axis (A) of the support structure (1), and the crossmember elements (5) are arranged so as to extend at an angle to the longitudinal axis (A) of the support structure (1).

10. Non-driven commercial vehicle, in particular a trailer that can be or is coupled to a tractor unit, **characterised in that** it comprises a support structure (1) according to any of the preceding claims.

## Revendications

1. Structure de support (1) pour un véhicule utilitaire non entraîné, en particulier une remorque pouvant être couplée ou couplée à une machine de traction, comprenant :
- un nombre d'éléments de longeron principaux (4),
- un nombre d'éléments de traverse (5),
- un nombre d'éléments de longeron secondaires (6) disposés entre le nombre d'éléments de longeron principaux (4), en particulier de manière à s'étendre de manière parallèle par rapport aux éléments de longeron principaux (4), dans laquelle
- au moins un élément de longeron secondaire (6) est réalisé avec au moins une zone de réception (7) servant à recevoir par endroits au moins un élément de traverse (5) ou comprend au moins une zone de réception (7) de ce type,
- au moins une zone de réception (7) d'au moins un élément de longeron secondaire (6) est réalisée de manière ouverte d'un côté,
- la zone de réception (7) est réalisée par un évidement (8) ouvert d'un côté, configuré en forme de Y dans l'élément de longeron secondaire (6),
- l'évidement (8) est disposé, dans l'état de montage de la structure de support (1), de manière orientée en direction d'un sol,
- au moins les éléments de longeron secondaires (6) sont réalisés en tant qu'éléments de construction en forme de profils,
**caractérisée en ce que** les dimensions de l'évidement (8) sont adaptées aux dimensions de l'élément de traverse (5) si bien que l'élément de traverse (5) traverse l'évidement (8) dans la direction transversale.

2. Structure de support selon la revendication 1, **caractérisée en ce que** les éléments de traverse (5) sont disposés de manière à s'étendre par endroits à travers une zone de réception (7) d'au moins un élément de longeron secondaire (6).

3. Structure de support selon la revendication 1 ou 2, **caractérisée par** un élément de montage (9) recouvrant l'évidement (8) dans l'état de montage de la structure de support (1), fixé au moins au niveau de l'élément de longeron secondaire (6).

4. Structure de support selon la revendication 3, **caractérisée en ce que** l'élément de montage (9) est fixé en supplément au niveau d'un élément de traverse (5).

5. Structure de support selon l'une quelconque des revendications précédentes, **caractérisée par** plusieurs éléments de longeron secondaires (6) réalisés avec des zones de réception (7) respectives ou comprenant des zones de ce type, dans laquelle les zones de réception (7) côté élément de longeron secondaire d'éléments de longeron secondaires (6) disposés de manière adjacente sont disposées en affleurement entre elles.

6. Structure de support selon l'une quelconque des revendications précédentes, **caractérisée par** une structure de cadre (10), laquelle comprend deux éléments longitudinaux de cadre (11) disposés de manière à s'étendre en direction de l'axe longitudinal (A) de la structure de support (1) et au moins deux éléments transversaux de cadre (12) disposés de manière à s'étendre de manière transversale par rapport à la direction de l'axe longitudinal (A) de la structure de support (1), dans laquelle les deux éléments longitudinaux de cadre (11) sont reliés entre eux par les deux éléments transversaux de cadre (12).

7. Structure de support selon l'une quelconque des revendications précédentes, **caractérisée en ce que** les éléments de longeron secondaires (6) s'étendent en direction de l'axe longitudinal (A) de la structure de support (1) au moins entre le premier élément de traverse (5) disposé dans la zone d'une extrémité avant de la structure de support (1) et le dernier élément de traverse (5) disposé dans la zone d'une extrémité arrière de la structure de support (1) ou un élément transversal de cadre (12) formant l'extrémité arrière de la structure de support (1).

8. Structure de support selon l'une quelconque des revendications précédentes, **caractérisée en ce qu'au** moins les éléments de longeron secondaires (6) sont formés à partir d'un matériau métallique à base d'aluminium.

9. Structure de support selon l'une quelconque des revendications précédentes, **caractérisée en ce que** les éléments de longeron principaux (4) sont disposés de manière à s'étendre le long d'un axe longitudinal (A) de la structure de support (1) et les éléments de traverse (5) sont disposés de manière à s'étendre de manière angulaire par rapport à l'axe longitudinal (A) de la structure de support (1).

10. Véhicule utilitaire non entraîné, en particulier remorque pouvant être couplée ou couplée à une machine de traction, **caractérisé en ce qu'**il comprend une structure de support (1) selon l'une quelconque des revendications précédentes.
